# EUROPÄISCHE PATENTANMELDUNG

(11) **EP 1 995 041 A2**
(43) Veröffentlichungstag der Anmeldung: **26.11.2008**
(21) Anmeldenummer: 08104095.8
(22) Anmeldetag: 26.05.2008
(51) Int. Cl.: B29C 59/02, B29C 51/36

(54) **Verfahren zur Oberflächenstrukturierung von Dekorplatten und Dekorfolien**

(30) Priorität: 25.05.2007 AT 8342007
(71) Anmelder: Sibu Design GmbH & Co KG, 4452 Ternberg (AT)
(72) Erfinder: Burgholzer, Karl, 4421, Aschach/Steyr (AT)
(74) Vertreter: Müllner, Martin

(57) **Zusammenfassung**

Ein Verfahren zur Oberflächenstrukturierung von Dekorplatten (1) oder -folien, etwa für die Wandverkleidung, geht von einer Trägerschichtplatte (2) oder -folie und einer mit dieser fest verbundenen Dekorschicht (3) aus. Dabei kann es sich um eine mit der Trägerschichtplatte (2) oder -folie durch Kleben fest verbundene Dekorschichtplatte oder -folie handeln. Die Dekorplatte (1) oder -folie wird erhitzt und mit der nun verformbaren Dekorschicht (3) gegen eine räumlich strukturierte Saugfläche (10) eines porösen Saugkörpers (7) gelegt. Letzterer ist Teil einer Unterdrucktiefziehvorrichtung, mit welcher die Dekorschicht (3) in die Struktur der Saugfläche (10) hineingezogen wird. Die Trägerschichtplatte (2) oder -folie bleibt dabei im Wesentlichen eben. Um dies zu erreichen ist es günstig, wenn man die Dekorplatte (1) oder -folie entweder nur dekorschichtseitig oder jedenfalls dekorschichtseitig stärker als trägerschichtseitig erhitzt. Die Struktur der Saugfläche (10) kann von einem Modell oder Original, z.B. von Krokodilleder, abgeformt werden. Die sich ergebende erhabene Struktur der Dekorschicht (3) hat unterschiedliche Materialdichten und fühlt sich örtlich weich an.

## Beschreibung

### Technisches Gebiet

Die vorliegende Erfindung betrifft ein Verfahren zur Oberflächenstrukturierung von Dekorplatten und Dekorfolien aus thermoplastischen Kunststoffen durch Erhitzen und Unterdrucktiefziehen mit einem das Negativ der Struktur aufweisenden Saugkörper aus porösem Material, durch welchen ein Ansaugen der Dekorplatten bzw. -folien erfolgt.

### Stand der Technik

Dekorplatten und -folien dieser Art werden zur Verkleidung von Raumwänden sowie von Oberflächen aller Art eingesetzt.

Es ist bekannt, eine solche Dekorplatte oder -folie aus Kunststoff im Walzverfahren zu strukturieren bzw. Muster einzuprägen. Dadurch wirken Druckkräfte auf die Oberfläche, und es kommt zu Materialverdichtungen und zu einer besonders harten Struktur.

Aus der DE 69830318 Tist eine Dekorplatte aus mehreren Schichten bekannt, die hergestellt wird, indem die Schichten - gegebenenfalls unter Verwendung von Klebstoff - unter Druck bei erhöhter Temperatur aufeinander gepresst werden. Diese Verfahrensweise kann mit oder ohne Anlegen von Vakuum durchgeführt werden, und dabei kann außerdem in die Dekorschicht ein Relief eingepresst werden. Auch dadurch kommt es aber zu Materialverdichtungen und zu einer besonders harten Struktur.

Aus der DE 1629259 Aist ein Verfahren zur Herstellung einer Polystyrol-PVC-Verbundfolie bekannt, wobei erwähnt ist, dass sich solch eine Verbundfolie zur Vakuumverformung eignet. Details sind diesbezüglich aber nicht geoffenbart.

Andererseits ist natürlich seit langem bekannt, thermoplastische Kunststoffe durch Anlegen von Unterdruck tiefzuziehen ("Unterdrucktiefziehen"). Dabei wird der erhitzte Kunststoff auf eine entsprechend geformte Lochplatte gelegt und anschließend ein Unterdruck auf die Löcher der Lochplatte angelegt. Nachteilig ist dabei, dass die Löcher der Lochplatte störende Abdrücke im Kunststoff hinterlassen. Zur Abhilfe ist auch schon vorgeschlagen worden, anstatt der Lochplatte eine poröse Platte zu verwenden, siehe z.B. die gattungsbildende DE 1963573 A.

### Darstellung der Erfindung

Die Erfindung zielt darauf ab, Dekorplatten in Erscheinungsformen von Materialien zu schaffen, die typisch weiche Strukturen aufweisen. Es soll nicht nur beim Berühren, sondern auch bereits optisch ein originalgetreuer Eindruck vermittelt werden.

Dies wird dadurch erreicht, dass eine Trägerschichtplatte, oder -folie, z.B. aus Polystyrol oder Polyestergewebe, mit einer Dekorschicht unlösbar verbunden, insbesondere mit einer Dekorschichtplatte oder -folie, z.B. aus PVC, unlösbar verklebt wird, dass die dadurch entstandene Dekorplatte oder -folie erhitzt und dann mit der Dekorschichtoberfläche gegen eine strukturierte Saugfläche des Saugkörpers eingebracht wird, wobei sich die Trägerschichtplatte oder -folie bei Unterdruck nicht oder weniger und die Dekorschicht intensiv verformt und sich die Materialdichte insbesondere in der Dekorschicht strukturabhängig verkleinert, sodass sich weiche Erhebungen bilden.

Wenn man eine zweischichtige Verbundplatte oder -folie aus Kunststoff mit unterschiedlichen physikalischen Eigenschaften der Schichten etwa durch Wärmestrahlung (IR-Quellen) erwärmt und zumindest die Dekorschichtoberfläche des thermoplastischen Kunststoffes auf Verformungstemperatur bringt, dann wird bei einem nachfolgenden Verformen in erster Linie die Dekorschicht umgestaltet und einer Formänderung unterzogen. Wenn aber, wie hier beim erfindungsgemäßen Verfahren, die Oberfläche nicht gewalzt wird, sondern einem Unterdrucktiefziehen unterworfen wird, dann kommt es zu einem völlig anderen Erscheinungsbild des Verfahrensproduktes. Zum Unterdrucktiefziehen wird ein poröser Körper als Saugkörper verwendet, der den Sog auf Grund seines porösen Materials völlig gleichmäßig über die Oberfläche, nämlich die Saugfläche des Saugkörpers, verteilt. Die Saugfläche ist als Negativ der erwünschten Struktur - z.B. als Negativ einer Noppenstruktur von Straußenleder - gestaltet. Diese kann beispielsweise durch Elektroerosion auf fotographischem Wege oder durch Abformen von einem Modell oder Original, z.B. einem Stück echtem Straußenleder, strukturiert sein. Das poröse Material des Saugkörpers ist fein genug, sodass die Oberfläche des Endproduktes keine Körnung erkennen lässt, dass aber ein starker Sog an der Dekorschichtoberfläche angreift. Wird also die zumindest dekorschichtseitig erhitzte, noch plane Mehrschichtplatte (Zweischichtplatte) auf das Bett, nämlich auf die strukturierte Saugfläche des Saugkörpers, gelegt, dann saugt die Anordnung strukturabhängig Teile der Dekorschicht mehr oder weniger tief in die Form hinein.

Die Trägerschichtplatte oder -folie für die Dekorschicht bildet gewissermaßen den steifen Rücken oder Rückhalt dazu. Zu diesem Zweck ist es günstig, wenn man die Dekorplatte oder -folie entweder nur dekorschichtseitig oder jedenfalls dekorschichtseitig stärker als trägerschichtseitig erhitzt. Damit bleibt die Trägerschichtplatte oder -folie kühler und lässt sich somit weniger leicht verformen. Die Dekorschichtdicke variiert örtlich entsprechend der gewünschten erhabenen Struktur des nachzubildenden Originals (z.B. Straußenleder), und damit Hand in Hand variiert (wegen der steiferen Trägerschichtplatte oder -folie) auch die Dichte des Materials. Die Dekorplatte oder -folie als Verfahrensprodukt fühlt sich an der Oberfläche weich an und hat auch die entsprechende weiche Erscheinungsform. Je nach den Materialeigenschaften kann sich der Formänderungswiderstand der Trägerschichtplatte auch bei einseitiger Erhitzung, also bei Erhitzung der Dekorschicht allein, verringern, und somit kann eine leichte Wellung auch der Rückseite der Dekorplatte entstehen. Eine Wellung ist dann erwünscht, wenn eine besonders ausgeprägte Struktur im Dekor gefordert ist, die durch Addition der Verformung der Trägerplatte und der Dekorschicht erreichbar ist. Werkstoffe (Kunststoffe), Materialstärken und Temperaturen ein- oder beidseitig der Dekorplatte oder -folien sowie Unterdruck werden aufeinander abgestimmt, um ein naturgetreues Endprodukt zu erhalten. Auf diese Weise lassen sich auch Stoffbespannungen von Wänden wie auch auf gekrümmten Flächen imitieren, wobei über eine bisher bekannte photographische Wiedergabe weit hinausgehend auch die Oberflächenbeschaffenheit nachgebildet wird. Ein typisches Beispiel sind hier Schnürlsamtbespannungen oder Plüschbespannungen etwa mit floralen erhabenen Mustern.

### Kurze Beschreibung der Abbildungen der Zeichnungen

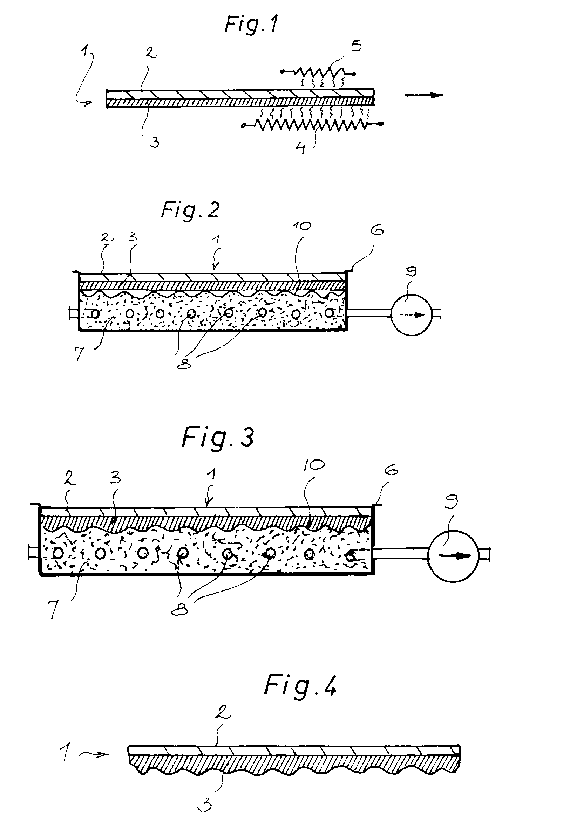

Die Erfindung wird nachfolgend an Hand einer schematischen Zeichnung beschrieben. Fig. 1 zeigt einen Querschnitt durch eine Dekorplatte gegenüber einer Heizung; Fig. 2 die Dekorplatte in einer Unterdrucktiefziehform; Fig. 3 eine Darstellung nach Fig. 2 nach Einschalten eines Unterdruckaggregates; und Fig. 4 das Endprodukt im Querschnitt.

### Bester Weg zur Ausführung der Erfindung

Ein Rohling einer Dekorplatte 1 gemäß Fig. 1 wird von einer Trägerschichtplatte 2 (z.B. aus Polyurethan) mit einer fest verbundenen Dekorschicht 3 gebildet, die auch durch eine fest aufgeklebte Dekorschichtplatte realisiert sein kann. Zum Verkleben werden Zweikomponenten-Kleber eingesetzt. Die Dekorschicht oder die Dekorschichtplatte ist vorerst im Wesentlichen plan, allenfalls mit Einschnitten oder Ritzen versehen und eingefärbt, beispielsweise marmoriert. Die Dekorplatte 1 kann beispielsweise 230 cm x 60 cm messen. Es wird die Dekorschicht 3 elektrisch, hier durch Widerstandsheizelemente 4, bzw. allenfalls auch die Trägerschichtplatte 2, letztere durch die Widerstandselemente 5, beheizt. Wesentlich ist, dass die Dekorschicht 3 bis zur Verformungstemperatur aufgeheizt wird, sodass anschließend in erster Linie (bzw. ausschließlich) das Material der Dekorschicht 3 und nicht die Trägerschichtplatte 2 verformt wird. Die so vorbehandelte Dekorplatte 1 wird in eine Vorrichtung bzw. Form zum Unterdrucktiefziehen (Fig. 2) eingelegt. Dabei handelt es sich um eine Wanne 6 (z.B. 230 cm x 60 cm) mit einem porösen Saugkörper 7 am Wannenboden. In diesem oder unter diesem Saugkörper 7 sind Saugleitungen 8 mit Perforationen vorgesehen, die mit einem Unterdruckaggregat, z.B. einer Saugpumpe 9, in Verbindung stehen. Für den porösen Saugkörper 7 kann feinkörniges Material, z.B. leicht zu bearbeitendes oder gussfähiges Material wie Polyurethan, verwendet werden. Die Wanne 6 lässt nur die Oberfläche des Saugkörpers 7 frei, alle anderen Flächen des Saugkörpers 7 sind luftdicht umschlossen. Infolge des porösen Materials wirkt die Oberfläche des Saugkörpers 7 somit als Saugfläche 10, sobald die Saugpumpe 9 eingeschaltet ist. Diese Oberfläche ist räumlich strukturiert und weist die Negativform eines gewünschten Musters auf. Eine solche Negativform kann durch Materialabtragung auf photochemischem oder elektrophoretischem Wege oder einfach durch Abgießen von einem Modell oder einem Original entstehen.

Gemäß Fig. 2 ist die Saugpumpe 9 noch nicht eingeschaltet. Die Dekorplatte 1 liegt also mit der verformbaren weichen Dekorschicht 3 auf den Strukturerhebungen der Saugfläche 10 auf. Es wird nun gemäß Fig. 3 die Saugpumpe 9 eingeschaltet. Dabei wird das Material der Dekorschicht 3 in die räumliche Struktur des Saugkörpers 7 bzw. der Saugfläche 10 hineingesaugt, wobei aber die Trägerschichtplatte 2 weitgehend (oder vollkommen) eben bleibt. Da sich die Dekorschicht 3 nicht von der Trägerschichtplatte 2 ablösen kann, kommt es infolge der erhabenen Strukturierung der Dekorschicht 3 zu unterschiedlichen Materialdichten in dieser und damit zu Zonen, die sich besonders weich anfühlen.

Die Dekorplatte 1, wie sie als Verfahrensprodukt zur Verfügung steht (Fig. 4), hat somit relativ weiche Erhebungen auf einer verhältnismäßig festen Basis. Diese Eigenschaft ist bei Wandverkleidungsplatten oder dergleichen sehr erwünscht, und es kann etwa eine Lederoptik (Krokodilleder, Straußenleder) besonders naturnahe bzw. auch Samt oder Plüsch über die Optik hinaus annähernd originalgetreu realisiert werden.

Als Beispiele für Trägerschichtplatten seien Polystyrol oder PMMA erwähnt. Werden Trägerschichtfolien verwendet, dann ist beispielsweise ein Polyestergewebe geeignet. Dieses gibt zwar beim Unterdrucktiefziehen etwas nach, es wird aber in erster Linie die darüber liegende thermoplastische Dekorschicht in ihrer Dichte verändert und damit in eine erhabene Struktur verwandelt. Letztere kann aus PVC oder Polyurethan bestehen, um Beispiele zu nennen. Die Temperaturbereiche lagen für die Trägerschichtplatte oder -folie bei 20 - 140°C und für die Dekorschicht bei 160 - 180°C. Es wurden Infrarotstrahler zur einseitigen oder beiderseitigen Erwärmung bzw. Erhitzung verwendet.

## Patentansprüche

1. Verfahren zur Oberflächenstrukturierung von Dekorplatten (1) und Dekorfolien aus thermoplastischen Kunststoffen durch Erhitzen und Unterdrucktiefziehen mit einem das Negativ der Struktur aufweisenden Saugkörper (7) aus porösem Material, durch welchen ein Ansaugen der Dekorplatten (1) bzw. -folien erfolgt, **dadurch gekennzeichnet, dass** eine Trägerschichtplatte (2) oder -folie mit einer Dekorschicht (3) unlösbar verbunden wird, dass die dadurch entstandene Dekorplatte (1) oder-folie erhitzt und dann mit der Dekorschichtoberfläche gegen eine strukturierte Saugfläche (10) des Saugkörpers (7) eingebracht wird, wobei sich die Trägerschichtplatte (2) oder -folie bei Unterdruck nicht oder weniger und die Dekorschicht (3) intensiv verformt und sich die Materialdichte insbesondere in der Dekorschicht (3) strukturabhängig verkleinert, sodass sich weiche Erhebungen bilden.

2. Verfahren nach Anspruch 1, **dadurch gekennzeichnet, dass** man die Dekorplatte (1) oder -folie entweder nur dekorschichtseitig oder jedenfalls dekorschichtseitig stärker als trägerschichtseitig erhitzt.

3. Verfahren nach Anspruch 1 oder 2, **dadurch gekennzeichnet, dass** die Trägerschichtplatte oder -folie aus Polystyrol oder Polyestergewebe besteht.

4. Verfahren nach einem der Ansprüche 1 bis 3, **dadurch gekennzeichnet, dass** die Dekorschicht durch eine mit der Trägerschichtplatte oder -folie unlösbar verklebte Dekorschichtplatte oder -folie gebildet ist.

5. Verfahren nach einem der Ansprüche 1 bis 4, **dadurch gekennzeichnet, dass** die Dekorschicht aus PVC besteht.
